# EUROPEAN PATENT SPECIFICATION

(11) **EP 0 697 116 B1**
(45) Date of publication and mention of the grant of the patent: **12.07.2000**
(21) Application number: 95912539.4
(22) Date of filing: 07.03.1995
(51) Int. Cl.: G02B 6/255

(54) **ELECTRONIC CONTROL FOR WELDING OPTICAL FIBERS**
ELEKTRONISCHE STEUERUNG DES SCHWEISSENS VON OPTISCHEN FASERN
COMMANDE ELECTRONIQUE POUR SOUDAGE DE FIBRES OPTIQUES

(30) Priority: 08.03.1994 SE 9400779
(43) Date of publication of application: 21.02.1996
(73) Proprietor: TELEFONAKTIEBOLAGET LM ERICSSON, 126 25 Stockholm (SE)
(72) Inventor: DUMITRIU, Ion, S-149 35 Nynäshamn (SE); HULTEN, Ola, S-161 71 Bromma (SE)
(74) Representative: Rosenquist, Per Olof
(86) International application number: SE9500240
(87) International publication number: WO9524664

(56) References cited:
- EP-A- 0 583 155
- US-A- 5 002 351

## Description

### TECHNICAL FIELD

The present invention relates to electronic control in welding and/or heating optical fibers by means of an electric arc, in particular a control of the electric quantities of the electric arc.

### BACKGROUND

When optical fibers are welded by means of the intense heat in an electric arc variations in the arc occur when the surrounding air pressure varies. Thus the electric voltage over the electric arc is reduced at a decrease of the air pressure, what in turn results in a reduction of the electric current through the electric arc and thus a lower temperature in the electric arc and in the region of the fibers heated thereby. It results in turn in inferior welded splices generally having a larger attenuation.

### PRIOR ART

Different ways for compensating variations in the exterior air pressure have been proposed:

The European patent application EP-A1 0 504 519 for Fujikura Ltd. discloses an optical fiber welding device comprising a discharge unit 2 for obtaining an electric arc for melt-fusioning of optical fibers, a pressure sensor 6 for providing a signal corresponding to the ambient atmospheric pressure and a "discharge control unit 3" for control of the discharge in relation to the pressure signals so that to the discharge unit 2 an optimal current is delivered during the discharge. By means of feedback through a line from a resistor 251 in the welding electrode circuit the welding current can be maintained constant. The Japanese patent application JP A 63-106706, which is available to the public, also for Fujikura Ltd. relates to an optical fiber welding device of a similar kind.

Another European patent application EP-A1 0 583 155 for Fujikura Ltd. also discloses apparatus for welding optical fibers, in which the atmospheric pressure is measured and is used to provide "an optimal correction of the discharge current", i.e. of the electric current flowing between the discharge electrodes or in the electric arc. The discharge current can for different atmospheric pressures be made to produce a constant discharge power.

The German patent application DE-A1 37 24 914 made available to the public, for kabelmetal electro GmbH, describes a procedure for connecting two optical fibers by means of the energy from an electric arc. The procedure comprises among other things a control of the (gas) pressure which exists around the electric arc and of the current through the electric arc.

US patent US-A 5,002,351 for Szanto et al. relates to a melt welding device for optical fibers where it, according to the abstract, is arranged that "Once an arc is established between opposed electrodes, constant power is provided during the splicing." From the specification of this patent it does not appear what is meant by "power" or how "constant power" can be achieved.

### SUMMARY

It is an object of the invention to provide means whereby a good quality of welded splices and thus splices having a low attenuation and a good strength can be obtained when welding optical fibers to each other in an electric arc.

It is another object of the invention to provide a control of the electric quantities in an electric arc which is used for welding optical fibers together, so that essentially the same quality of a finished splice is obtained at a varying surrounding air pressure.

The mentioned objects are achieved by a method and a device according to the invention, the detailed characteristics of which appear from the appended claims.

Thus, in welding optical fibers the electric power in the actual electric arc circuit is fed back. The electric power is measured for instance as a product of a voltage which corresponds to an average value of the rectified, for instance full wave rectified, voltage, between the welding electrodes and a current which in the same way corresponds to an average value of the rectified, for instance full wave rectified, current flowing in the arc from one electrode to the other.

A first voltage can then be produced which is proportional to the instantaneous electric power developed in the electric arc in the welding. It is fed back to a control circuit for controlling circuits for generating the high voltage over the electrodes, so that the power is maintained essentially constant during the welding. Then, a second voltage can be produced which is representative of or proportional to the current through the welding electrodes, and a third voltage which is representative of or proportional to the voltage over the welding electrodes. The second and third voltages are multiplied by each other in a multiplying circuit for generating the first voltage.

### BRIEF DESCRIPTION OF THE DRAWINGS

The invention will now be described in more detail with reference to non-limiting embodiments and with reference to the accompanying drawings in which:
- Fig. 1 shows generally and schematically, as seen in the transverse direction of the fibers, welding of optical fibers in an electric arc,
- Figs. 2a and 2b show voltage pulses fed to a high voltage transformer and the behaviour of the electrode voltage as a function of time in welding optical fibers, respectively,
- Fig. 3 shows a diagram of an electrical important quantity in the electrode voltage as a function of the ambient air pressure,
- Fig. 4 shows a diagram of the attenuation in splices between optical fibers produced at a constant electrode voltage and varying ambient air pressures,
- Fig. 5 shows a circuit diagram, partly in block shape, of an electric circuit for generating an electric arc for welding optical fibers and
- Fig. 6 shows an alternative embodiment of a portion of the circuit diagram of Fig. 5.

### DETAILED DESCRIPTION

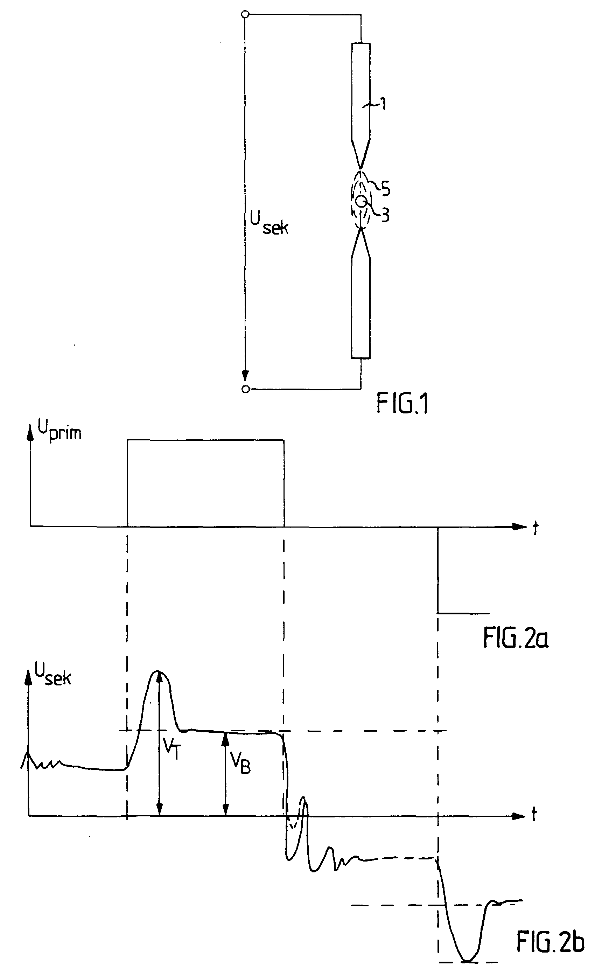

In Fig. 1 it is shown schematically, as seen from the side, electrodes 1 connected to a voltage Uₛₑₖ, where the electrodes are used for welding or in certain cases only heating one or several optical fibers 3 made of quartz, by means of an electric arc 5 generated between the points of the electrodes 1. Generally, in the production of the electric arc 5 an alternating voltage is used, so that the voltage Uₛₑₖ typically varies periodically.

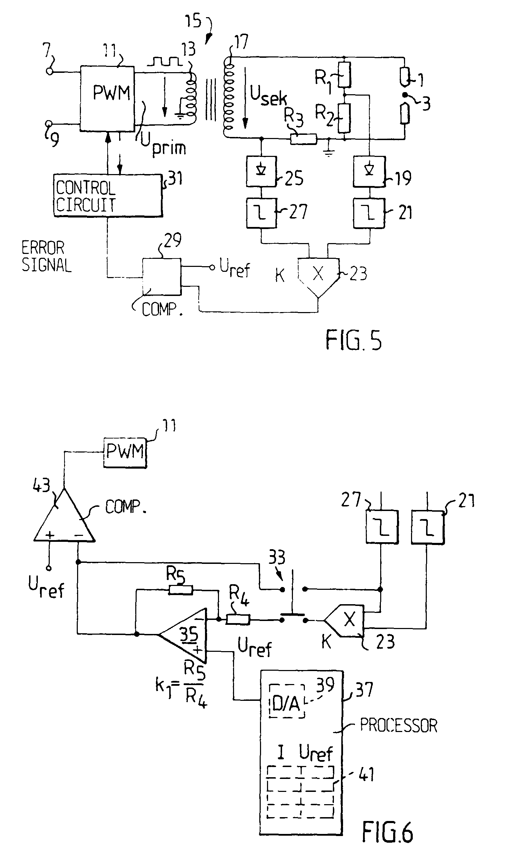

The voltage Uₛₑₖ is normally obtained from the high voltage, secondary winding of a transformer, to which a pulse shaped voltage Uₚᵣᵢₘ is delivered, to the primary winding thereof, see Fig. 5 and the more detailed description with reference thereto. In Fig. 2a a diagram is shown of the activating voltage pulses Uₚᵣᵢₘ as a function of time and in Fig. 2b a diagram of the secondary voltage Uₛₑₖ obtained therein over the secondary winding of the transformer and between the electrodes 1.

The primary voltage Uₚᵣᵢₘ comprises in the typical case periodically recurrent, similarly shaped positive and negative square voltage pulses, the width of which (pulse width modulation) is changed in order to drive a current of varying magnitude between the electrodes 1 in the electric arc 5 or equivalently thereto change the generation of electric power in the electric arc 5. It can also be considered to use a change of the pulse heights instead (amplitude modulation) for driving a variable electric current (also for generating a varying power in the electric arc) between the welding electrodes 1. The frequency of the pulses are typically in the range of 20 - 30 kHz.

Owing to the special physical processes in the electric arc 5 the secondary voltage Uₛₑₖ, i.e. the voltage over the electrodes 1, has a rather complicated behaviour, which is illustrated as a function of time in Fig. 2b. It can be observed, that in the ignition of the electric arc first a large short voltage pulse occurs over the electrodes, having the magnitude V_{T}, called the ignition voltage, after which a time period is obtained having an approximately constant, weakly decreasing voltage having an average voltage of the magnitude V_{B} and is called the burn voltage. It is maintained as long as the voltage between the electrodes 1 still has the same polarity.

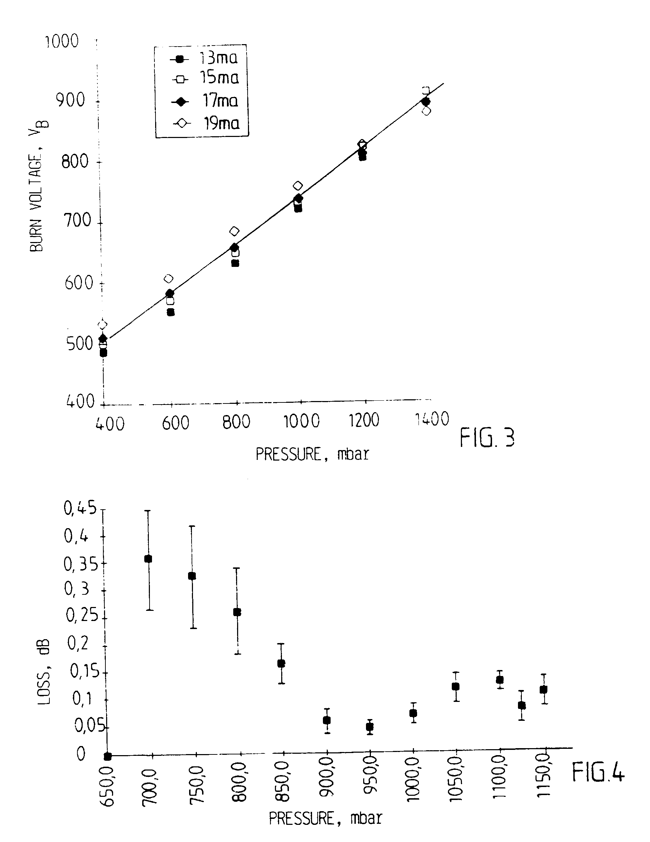

For changes in the ambient air pressure around the electric arc variations occur in the electric characteristic properties of the electric arc. An example thereof is illustrated in the diagram of Fig. 3, where the burn voltage V_{B} is plotted as a function of the ambient air pressure for a constant electric current through the electrodes and thus in the electric arc 5. As is illustrated by the curve of this diagram, the burn voltage V_{B} is essentially linearly dependent on the ambient pressure.

The different variations in the electrical conditions for varying air pressure influence the physical conditions in the electric arc 5. If thus an optimal welding current is set to an initial value for some ambient air pressure, so that the attenuation in a splice made by the electric arc, between two optical fibers 3 for this welding current and for this air pressure is given a minimum attenuation, the attenuation will increase in a welded splice made with this same welding current, when the air pressure is changed. It is illustrated by the diagram of Fig. 4, where the loss or the attenuation in a fiber splice is plotted as a function of the ambient air pressure for a constant welding current, which is set to give a low attenuation for an air pressure of 950 mbar.

In order to compensate the effects of varying pressures, previously the driver circuits for the electric arc have been arranged so that an essentially constant welding current is obtained. However, it does not always give a correct desired result, that is the splices made have not always a maintained low attenuation for varying pressures. It has appeared, that if instead the electric power generated in the electric arc is maintained constant in the production of fiber splices for varying air pressures, a better stability will be obtained and then approximately the same, continued low attenuation will be obtained in splices made for different ambient air pressures, provided that, in the corresponding manner as above, the electric power has been set to give a low attenuation in fiber splices for an initial value of the ambient air pressure.

A circuit solution for maintaining the electric power in the welding arc constant is shown in Fig. 5 as included in an electric circuit which is partly shown in block shape and is designed for generating the electric arc 5 for welding optical fibers 3. Between the connection terminals 7 and 9 a direct voltage is supplied. This voltage is received by a pulse width modulating circuit 11, which to the primary winding 13 of a transformer 15 outputs a voltage Uₚᵣᵢₘ comprising pulses, see Fig. 2a, the width of which is controlled, i.e. pulse width modulation is used.

As has been mentioned above, alternatively amplitude modulation can be used, wherein the height of the pulses in the primary voltage Uₚᵣᵢₘ are controlled.

In the transformer 15 the voltage Uₚᵣᵢₘ over the primary winding 13 is transformed to a high voltage Uₛₑₖ over the secondary winding 17. Over the secondary winding principally a square wave voltage is induced having the same general behaviour as the primary voltage, see Fig. 2a, which by the electric arc is changed into the secondary voltage Uₛₑₖ according to Fig. 2b. The two terminals of the secondary winding 17 are connected to the two welding electrodes 1, between which the electric arc 5 is formed for heating and/or welding an optical fiber 3 located between the points of the electrodes 13.

The secondary voltage Uₛₑₖ is rather high, typically in the range of 500 - 1000 volts, and is not suitable for a direct evaluation. Therefor a small voltage is extracted, which is proportional to the voltage Uₛₑₖ over the secondary winding 17, at the middle connection of a voltage divider circuit comprising two resistors R₁ and R₂, which have their other terminals coupled to the electrodes 1 or the connection terminals of the secondary winding 17. The second of these resistors, R₂, has its other terminal coupled to ground. The extracted voltage, i.e. the voltage over R₂, is rectified by an active, full wave rectifier or measurement rectifier 19, which is designed to rectify also small voltage signals and in the conventional way can be constructed as for instance comprising an operational amplifier having a diode in the feed back loop, and is filtered in a low pass filter 21 for eliminating too rapid voltage variations, such as primarily ripple from the electronic circuits but also the pulses obtained at the ignition of the electric arc between the electrodes, i.e. the pulses having heights equal to the ignition voltage V_{T}, see Fig. 2b. The rectified and filtered voltage is delivered to one terminal of a multiplier circuit 23 in the shape of a smoothed direct voltage, which reflects the average level of the voltage pulses in the secondary voltage U_{sec}, i.e. essentially the burn voltage V_{B}, which depends on the ambient air pressure.

A voltage proportional to the electric current through the secondary winding 17 and through the welding electrodes 1, i.e. proportional to the welding current, is extracted in the conventional way by the method that a resistor R₃ is arranged serially in the circuit comprising the secondary winding 17 and the electrodes 1 and that this resistor has one terminal connected to ground. From the other terminal of this resistor R₃, which is also connected to one connection terminal of the secondary winding 17, the voltage is extracted and is processed in the same way as the extracted voltage described above, which represents the secondary voltage. Thus the voltage is first rectified by an active full wave rectifying circuit or measurement rectifier 25 and is filtered by a low pass filtering circuit 27. The rectified and filtered voltage thus obtained is proportional to the welding current and is delivered to a second input terminal of the multiplier circuit 23.

The multiplier circuit 23 is designed for multiplying the two voltages which are fed to its inputs and provides a result on a third connection line, its output, so that the voltage on this output line is proportional to the product of the two delivered voltages and thus generally is equal to the product of these two voltages multiplied by a factor K.

The product voltage is then fed to one connection of a comparator 29, to the other input of which a reference voltage or control voltage U_{ref} is provided in some suitable way, not shown, such as in the simplest conceivable case from some manually adjustable potentiometer circuit (not shown). A comparator 29 provides on its output a voltage which is proportional to the difference of the voltage over the two inputs thereof. The signal from the comparator 29 is provided to a control circuit 31, which is arranged to control the pulse width modulating circuit 11. To the latter circuit such control signals are provided, that the pulse width is adjusted, so that the error signal on the input to the control circuit will be as small as possible.

In this way the product of voltage and current in the secondary circuit comprising the electric arc is fed back, so that this product is maintained constant. The product is proportional to the electric power generated in the secondary circuit of the transformer 15, i.e. substantially the electric power generated in the electric arc 5. By the feedback and the maintaining of a voltage, which is proportional to the power, at a constant value the circuit is, as has been mentioned above, less sensitive to variations in the ambient pressure and a low attenuation is maintained in fiber splices made at varying air pressures.

In Fig. 6 an alternative, more detailed circuit solution is illustrated for a portion of the circuit according to Fig. 5. The output from the multiplier circuit 23 is here connected to a switch 33, which in its normal position forwards the output signal from the multiplier circuit 23 through a resistor R₄ to the inverting input of an operational amplifier 35, which is connected as an amplifier having a gain k₁ as determined by the ratio R₅/R₄. R₅ is a resistor which is connected between the same inverting input of the operational amplifier 35 and the output thereof. To the not inverting input of the operational amplifier 35 the reference voltage U_{ref} is provided. It is obtained from a processor 37, which is used for control of the total welding procedure by means of also other devices not shown here. The voltage variations on the output of the operational amplifier 35 are proportional, as given by the mentioned constant of K₁ of proportionality, to the variations of the difference between the voltages on the inputs of the operational amplifier 35.

The processor 37 contains a D/A converter 39 for generating the analogue signal U_{ref} and a memory 41 for a table, where for each welding type, as given by a suitable welding current I, the corresponding reference value U_{ref} is stored. The reference value U_{ref} determines by means of the circuit as illustrated the power generation in the electric arc.

The output of the operational amplifier 35 is further connected to the inverting input connection of a comparator 43, which is comprised in the control circuit 31 of Fig. 5. To the other input terminal of the comparator 43, the not inverting input thereof, a second reference voltage U'_{Ref} is fed. The output signal from the comparator 43 is proportional to the difference of the voltage existing over its inputs and is provided to the pulse width modulating circuit 11.

When changing the state of the switch 33 the multiplier circuit 23 is disconnected and instead the voltage from the low pass filter 23, which represents the current in the electric arc, is directly delivered to the inverting input of the comparator 43. It gives a control of only the welding current, so that it will be maintained constant during the welding. Such a control can be necessary to arrange, when power control does not work, such as for instance when the points of the electrodes 1 are too bad.

## Claims

1. A method of welding two ends of optical fibers (3) to each other by means of an electric arc (5) generated between two electrodes (1) by an electric driver device (11, 15), **characterized** in that the electric power of the electric arc is constantly measured during the welding and that the electric driver device is controlled to maintain the electric power substantially constant during the welding.

2. A method according to claim 1, **characterized in** that in measuring the electric power a voltage is produced which is proportional to the electric power during the welding and is fed back to a control circuit (31) for control of the electric driver device.

3. A method according to claim 1, **characterized in** that a first voltage is produced, which is representative of or proportional to the electric current through the welding electrodes, and a second voltage is produced, which is representative of or proportional to the voltage over the welding electrodes, whereafter the first and second voltages are multiplied by each other to produce a third voltage representative of or proportional to the electric power during the welding.

4. A device for splicing two ends of optical fibers (3) by welding, comprising two electrodes (1) for generating an electric arc therebetween and an electric driver device (11, 15) connected to the two electrodes for providing a high voltage, **characterized by** measuring means for constantly measuring the electric power in the arc and a control circuit (31) connected to the measuring means and the electric driver device for maintaining the electric power in the arc substantially constant during the welding.

5. A device according to claim 4, **characterized in** that the measuring means are arranged to produce a voltage proportional to the electric power in the arc.

6. A device according to claim 4, **characterized by**
- first means (R₃, 25, 27) for producing a first voltage which is proportional to or representative of the electric current through the welding electrodes (1), and
- second means (R₁, R₂, 19, 21) for producing a second voltage, which is proportional to or representative of to the electric voltage over the welding electrodes, and
- means (23) for multiplying the first and second voltages by each other to produce a third voltage proportional to or representative of the electric power during the welding.

7. A device according to claim 6, **characterized in** that the multiplying means (23) comprise a multiplier circuit having two inputs and an output, the inputs of which are connected to the voltage producing first and second means (R₃, 25, 27; R₁, R₂, 19, 21) and on the output of which a voltage signal is provided, which is proportional to the product of the voltages, which are present on the inputs thereof.

8. A device according to claim 7, **characterized in** that the output terminal of the multiplier circuit (23) is connected to an input of a comparator (29; R₄, R₅, 35), that to another input of the comparator a line is arranged from means (37) for generating a constant reference voltage (U_{ref}) and that the output from the comparator is connected to the control circuit (31).

9. A device according to claim 8, **characterized in** that the means (37) for generating a constant reference voltage (U_{ref}) are arranged to generate different constant reference voltages depending on the type of optical fibers which are to be spliced.

## Patentansprüche

1. Verfahren zum Verschweißen von zwei Enden von optischen Fasern (3) miteinander mit Hilfe eines elektrischen Bogens (5), der zwischen zwei Elektroden (1) durch eine elektrische Treibereinrichtung (11, 15) erzeugt wird,
***dadurch gekennzeichnet,***
dass die elektrische Leistung des elektrischen Bogens während des Schweißvorgangs konstant gemessen wird und dass die elektrische Treibereinrichtung gesteuert wird, um während des Schweißvorgangs die elektrische Leistung im wesentlichen konstant aufrecht zu erhalten.

2. Verfahren nach Anspruch 1,
***dadurch gekennzeichnet,***
dass beim Messen der elektrische Leistung eine Spannung erzeugt wird, die proportional zu der elektrischen Leistung während des Schweißvorgangs ist, und an eine Steuerschaltung (31) zum Steuern der elektrischen Treibereinrichtung zurückgeführt wird.

3. Verfahren nach Anspruch 1,
***dadurch gekennzeichnet,***
dass eine erste Spannung erzeugt wird, die den elektrischen Strom durch die Schweißelektroden darstellt oder dazu proportional ist, und eine zweite Spannung erzeugt wird, die die Spannung über den Schweißelektroden darstellt oder dazu proportional ist, wobei die ersten und zweiten Spannungen miteinander multipliziert werden, um eine dritte Spannung zu erzeugen, die die elektrische Leistung während des Schweißvorgangs darstellt oder proportional dazu ist.

4. Einrichtung zum Verschweißen von zwei Enden von optischen Fasern (3) durch einen Schweißvorgang, umfassend zwei Elektroden (1) zum Erzeugen eines elektrischen Bogens dazwischen und eine elektrische Treibereinrichtung (11, 15), die mit den zwei Elektroden zum Bereitstellen einer Hochspannung verbunden ist,
***gekennzeichnet durch***
eine Messeinrichtung zum konstanten Messen der elektrischen Leistung in dem Bogen und eine Steuerschaltung (31), die mit der Messeinrichtung und der Treibereinrichtung verbunden ist, um die elektrische Leistung in dem Bogen während des Schweißvorgangs im wesentlichen konstant zu halten.

5. Einrichtung nach Anspruch 4,
***dadurch gekennzeichnet,***
dass die Messeinrichtung angeordnet ist, um eine Spannung zu erzeugen, die proportional zu der elektrischen Leistung in dem Bogen ist.

6. Einrichtung nach Anspruch 4,
***gekennzeichnet durch***
- eine erste Einrichtung (R₃, 25, 27) zum Erzeugen einer ersten Spannung, die proportional zu dem elektrischen Strom durch die Schweißelektroden (1) ist oder diesen darstellt; und
- eine zweite Einrichtung (R₁, R₂, 19, 21) zum Erzeugen einer zweiten Spannung, die proportional zu dem elektrischen Strom über den Schweißelektroden ist oder diesen darstellt; und
- eine Einrichtung (23) zum Multiplizieren der ersten und zweiten Spannungen miteinander, um eine dritte Spannung zu erzeugen, die proportional zu der elektrische Leistung während des Schweißvorgangs ist oder diese darstellt.

7. Einrichtung nach Anspruch 6,
***dadurch gekennzeichnet,***
dass die Multipliziererschaltung (23) eine Multipliziererschaltung mit zwei Eingängen und einem Ausgang umfasst, wobei die Eingänge davon mit den spannungserzeugenden ersten und zweiten Einrichtungen (R₃, 25, 27; R₁, R₂, 19, 21) verbunden sind und wobei auf dem Ausgang davon ein Spannungssignal bereitgestellt wird, dass proportional zu dem Produkt der Spannungen ist, die auf den Eingängen davon vorhanden sind.

8. Einrichtung nach Anspruch 7,
***dadurch gekennzeichnet,***
dass der Ausgangsanschluss der Multipliziererschaltung (23) mit einem Eingang eines Vergleichers (29; R4, R5, 35) verbunden ist, dass an einem anderen Eingang des Vergleichers eine Leitung von einer Einrichtung (37) zum Erzeugen einer konstanten Referenzspannung (U_{ref}) angeordnet ist, und dass der Ausgang von dem Vergleicher mit der Steuerschaltung (31) verbunden ist.

9. Einrichtung nach Anspruch 8,
***dadurch gekennzeichnet,***
dass die Einrichtung (37) zum Erzeugen einer konstanten Referenzspannung (U_{ref}) angeordnet ist, um verschiedene konstante Referenzspannungen in Abhängigkeit von dem Typ von optischen Fasern, die verspleißt werden sollen, zu erzeugen.

## Revendications

1. Procédé pour souder l'une à l'autre deux extrémités de fibres optiques (3) au moyen d'un arc électrique (5) généré entre deux électrodes (1) par un dispositif d'attaque électrique (11, 15), caractérisé en ce que la puissance électrique de l'arc électrique est constamment mesurée durant le soudage et en ce que le dispositif d'attaque électrique est commandé de façon à maintenir la puissance électrique sensiblement constante durant le soudage.

2. Procédé selon la revendication 1, caractérisé en ce que, lors de la mesure de la puissance électrique, une tension est produite, celle-ci étant proportionnelle à la puissance électrique durant le soudage, et étant redélivrée à un circuit de commande (31) pour la commande du dispositif d'attaque électrique.

3. Procédé selon la revendication 1, caractérisé en ce qu'une première tension est produite, celle-ci étant représentative du courant électrique circulant à travers les électrodes de soudage, ou proportionnelle à celui-ci, et en ce qu'une deuxième tension est produite, celle-ci étant représentative de la tension sur les électrodes de soudage, ou proportionnelle à celle-ci, après quoi les première et deuxième tensions sont multipliées l'une par l'autre afin de produire une troisième tension représentative de la puissance électrique durant le soudage, ou proportionnelle à celle-ci.

4. Dispositif pour raccorder deux extrémités de fibres optiques (3) par soudage, comprenant deux électrodes (1) pour générer un arc électrique entre celles-ci et un dispositif d'attaque électrique (11, 15) connecté aux deux électrodes pour délivrer une tension élevée, caractérisé par des moyens de mesure pour mesurer constamment la puissance électrique dans l'arc et par un circuit de commande (31) connecté aux moyens de mesure et au dispositif d'attaque électrique pour maintenir la puissance électrique dans l'arc sensiblement constante durant le soudage.

5. Dispositif selon la revendication 4, caractérisé en ce que les moyens de mesure sont configurés de façon à produire une tension proportionnelle à la puissance électrique dans l'arc.

6. Dispositif selon la revendication 4, caractérisé par :
- des premiers moyens (R₃, 25, 27) pour produire une première tension qui est proportionnelle au courant électrique circulant à travers les électrodes de soudage (1), ou représentative de celui-ci, et
- des deuxièmes moyens (R₁, R₂, 19, 21) pour produire une deuxième tension qui est proportionnelle à la tension électrique sur les électrodes de soudage, ou représentative de celle-ci, et
- des moyens (23) pour multiplier les première et deuxième tensions l'une par l'autre afin de produire une troisième tension proportionnelle à la puissance électrique durant le soudage, ou représentative de celle-ci.

7. Dispositif selon la revendication 6, caractérisé en ce que les moyens de multiplication (23) comprennent un circuit de multiplicateur comportant deux entrées et une sortie, dont les entrées sont connectées aux premiers et deuxièmes moyens de production de tension (R₃, 25, 27 ; R₁, R₂, 19, 21), et sur la sortie duquel un signal de tension est délivré, celui-ci étant proportionnel au produit des tensions qui sont présentes sur les entrées de celui-ci.

8. Dispositif selon la revendication 7, caractérisé en ce que la borne de sortie du circuit de multiplicateur (23) est connectée à une entrée d'un comparateur (29 ; R₄, R₅, 35), en ce que, sur une autre entrée du comparateur, une ligne est agencée à partir de moyens (37) pour générer une tension de référence constante (U_{ref}), et en ce que la sortie du comparateur est connectée au circuit de commande (31).

9. Dispositif selon la revendication 8, caractérisé en ce que les moyens (37) pour générer une tension de référence constance (U_{ref}) sont configurés de façon à générer des tensions de référence constantes différentes en fonction du type de fibres optiques qui doivent être raccordées.
